# EUROPEAN PATENT SPECIFICATION

(11) **EP 2 019 001 B1**
(45) Date of publication and mention of the grant of the patent: **13.06.2012**
(21) Application number: 07381054.1
(22) Date of filing: 27.07.2007
(51) Int. Cl.: B60R 21/233

(54) **Dual chamber airbag module with anti-return difuser.**
Doppelkammerairbagmodul mit Anti-Rücklauf-Diffusor
Module de coussin d'air à deux chambres doté d'un diffuseur anti-retour

(43) Date of publication of application: 28.01.2009
(73) Proprietor: Dalphi Metal España, S.A., 28006 Madrid (ES)
(72) Inventor: Duarte de Arez, Luis José, 47151 Valladolid (ES)
(74) Representative: Mehnert, Bernhard

(56) References cited:
- EP-A- 1 340 656
- WO-A-2005/113300
- DE-A1- 19 541 513
- DE-A1- 19 930 155
- US-A- 4 004 827
- US-A1- 2002 195 804
- US-A1- 2004 075 254

## Description

### INVENTION FIELD.

This invention refers to an airbag module for cars with dual chamber bag and, more specifically, a side airbag module with a thorax chamber and a pelvis chamber.

### INVENTION BACKGROUND

In previous technology they are known as side airbags that, in order to better protect vehicle occupants, have two chambers, one focused to protect the thorax (or thorax/pelvis combination) and another to protect the pelvis (or complement the pelvic protection), and those that, in the event of collision, are supplied gas at two different pressure levels, less for the thorax chamber than the pelvis chamber.

In this sense, the document EP 1 340 656 describes a side airbag module with two chambers, which are supplied gas produced by a generator through a distributor conduit with two output nozzles for each one of the chambers in which the desired pressure of each chamber is achieved by suitably sizing each one of the nozzles.

In addition, document WO 2005/113300 describes a side airbag module with a thorax/pelvis chamber and a pelvis chamber which are supplied gas produced by a generator through a distribution conduit through certain orifices. This side airbag module can include additional means for better distribution of gas in the thorax/pelvis chamber.

An airbag module according to the preamble of claim 1 is known from US 2004/075254.

An inconvenience of side airbag modules known in the technology is that once the generator has supplied all the gas available to the two chambers of the bag, the difference in pressure between them forces gas two move from the chamber with greater pressure (the pelvis chamber in this kind of airbag modules) to the chamber of less pressure (the thorax chamber or thorax/pelvis chamber) through said distributor conduit. This circumstance prevents the airbag module from adapting to crashes of varying severity.

This invention is designed to resolve this inconvenience.

### SUMMARY OF THE INVENTION

An objective of this invention is to provide an airbag module with at least two chambers that is adaptable to different conditions of crash or collision severity. The goal is to have different crash configurations and the corresponding evolutions (increase of impact speed, barrier change ...) considered by the administrative regulations and/or demanded by consumers.

Another objective of this invention is to provide an airbag module with at least two chambers that maintain different pressure levels during the entire interaction period between the airbag module bag and the vehicle occupant.

Another objective of this invention is to provide a side airbag module with at least two chambers for an effective protection of the thorax and pelvis of the occupant maintaining different levels of pressure during the entire interaction period between the bag of the airbag module and the occupant.

These and other objectives are achieved using a car airbag module that consists of a bag formed by at least two inflatable chambers with gas produced by a generator and provided to each one of them by nozzles of a distributor conduit connected to the generator; the nozzles shall be configured to provide different levels of pressure in such chambers and which also includes a diffuser associated to the distributor conduit to prevent the passage of gas between chambers through said distributor conduit after completing the supply of the generator.

An advantage of this invention is that the adaptability of the airbag module to crash conditions is of passive type and therefore does not require any signal to activate it.

Another advantage of this invention is the ease of integration of an anti-return diffuser in the airbag module.

Another advantage of this invention is low cost involved by the inclusion of said diffuser.

Other characteristics and advantages of this invention shall be drawn from the detailed description following by an execution for illustration purposes but not limited to its purpose with regards to the drawings attached.

### DESCRIPTION OF FIGURES

Figure 1 is a schematic view of a conventional side airbag with a thorax chamber and pelvis chamber that are supplied gas through a distribution conduit connected to a gas generator.
Figures 2a and 2b are schematic views of a side airbag which is not part of the invention in which the anti-return diffuser is a part integrated in the pelvis chamber.
Figures 3a and 3b are schematic views, by section A-A' of Figure 1, which illustrate the operation of the anti-return diffuser as per this invention: Figure 3a shows a bag unfold status supplying gas the pelvis chamber and in Figure 3b, the status of unfolded bag when the generator no longer produces gas.
Figures 4a and 4b and Figures 5a and 5b are schematic views of two executions of this invention in which the anti-return diffuser is a piece integrated in the two bag chambers.
Figures 6a and 6b are schematic views of an execution of this invention in which the anti-return diffuser is a piece integrated in the generator and distribution conduit assembly.
Figures 7a and 7b are pressure-time charts in the two chambers of a conventional airbag module and an airbag module as per this invention during its unfolding during a collision.

### DETAILED DESCRIPTION OF THE INVENTION

For the purposes of this invention, the fundamental elements of the airbag module subject of this invention are:
- A bag 11 with, at least, two chambers 13, 15. The following detailed description of preferential executions of the invention shall refer to a side airbag module with chambers 13, 15 destined, respectively, to protect the thorax and pelvis of the occupant 17, but is also applicable to any other airbag module, both lateral and frontal, with, at least two chambers configured to unfold in the case of collision with two different levels of gas pressure. Furthermore, chambers 13, 15 can be formed in bag 11 through any of the techniques used in the industry of airbag modules as long as they guarantee sealed separation between them.
- A generator 21 with a distribution conduit 23 connected to it with two gas outlets towards each one of the chambers 13, 15. On lateral airbag modules, the distribution conduit 23 is usually located in an area of the bag 11 near the separation of both chambers 13, 15 and duly reinforced so that the distributor conduit 23 can be connected to it. In addition, the generator 21 can be connected to the distribution conduit 23 directly or via an intermediate conduit as it could be located on the vehicle in a different location to the bag 11.

According to this invention, the airbag module also includes a diffuser element with, among others, an anti-return valve function between both chambers 13, 15, which guarantees different pressure levels during all bag unfold phases that can take place during a collision and supports multiple executions such as the ones we have described.

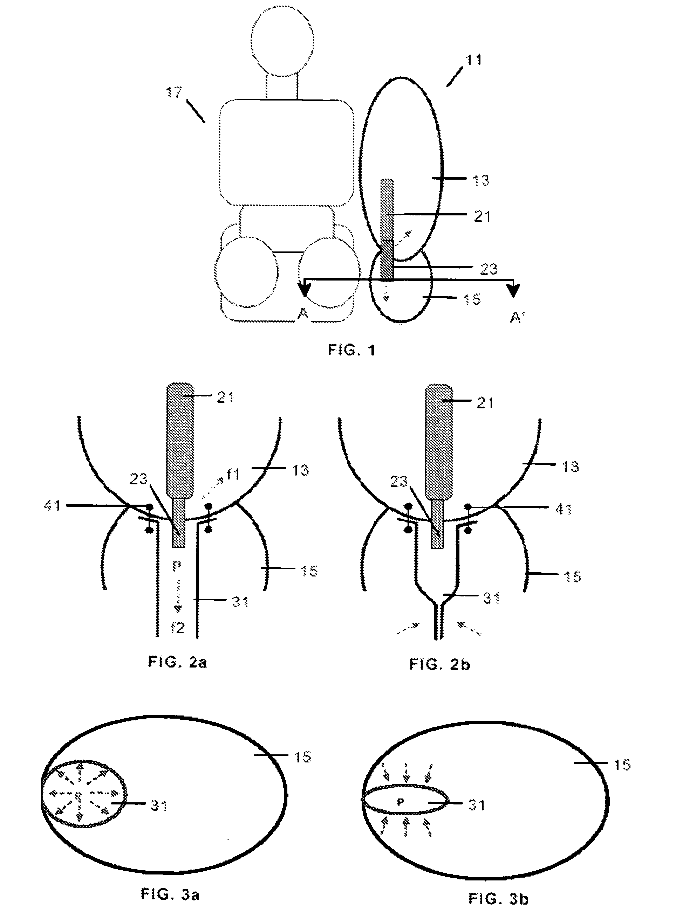

Figures 2 and 3 illustrate an airbag module with diffuser 31 in tubular form on the inside of the pelvis chamber 15 and connected to bag 11 via seams 41. The diffuser 31 has greater length than the part of the distributor conduit 23 located inside the pelvis chamber 15.

Figure 2a shows a bag 11 unfold status that provides gas to chambers 13, 15 through nozzles from the distribution conduit 23 illustrated by arrows f1 and f2 and in which the diffuser 31 does not represent an obstacle to gas passing to the pelvis chamber 15 because, as illustrated in Figure 3a, pressure P inside is greater than the pressure inside the pelvis chamber 15, which makes the diffuser adopted an expanded form.

Figure 2b shows the status of bag 11 after the gas supply to the chambers 13, 15 has ended and contact with the occupant. As illustrated in Figure 3b, the pressure of pelvis chamber 15 is greater than pressure P inside the diffuser 31 closing the diffuser end 31 preventing the gas from pelvis chamber 15 passing to the thorax chamber 13 through the distribution conduit 23.

The diffuser 31 can be performed using fabric similar to bag 11 with our without silicon lining or other suitable flexible material.

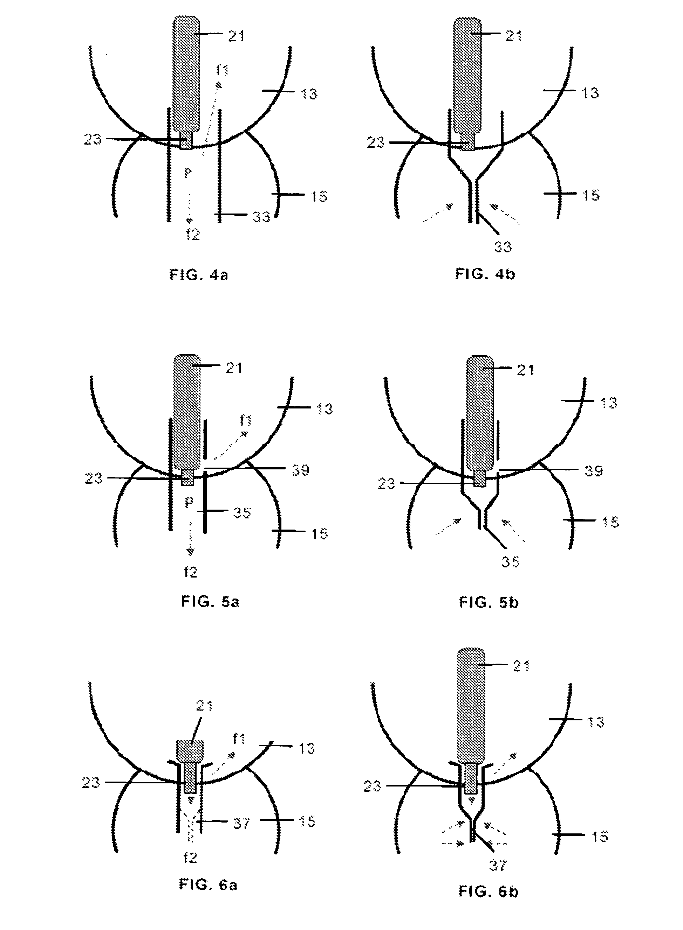

Figures 4a and 4b illustrates an airbag module with tubular diffuser 33 integrated in bag 11 that extends to both the pelvis chamber 15 and thorax chamber 13 to fulfil, in addition to preventing gas return from pelvis chamber 15 to thorax chamber 13, a gas distribution function between the two chambers 13, 15 through the outlets illustrated by arrows f1 and f2 fulfilling, at least in part, the function of the distribution conduit mentioned 23 (as schematically illustrated in Figures 4a and 4b by representing it as a small dimension). This execution allows reducing the number of parts of the airbag module and consequently reduce weight and cost.

Figures 5a and 5b illustrates an airbag module with a diffuser 35 that differences from the execution described in how to distribute gas to chambers 13, 15 and especially the location of gas outlet f1 to thorax chamber 13 through orifice 39.

Figures 6a and 6b illustrate an airbag module with a tubular diffuser 37 connected to the generator assembly 21 and the distributor conduit 23 that, otherwise, has a similar function to the airbag module represented in Figures 5a and 5b.

The diffuser 37 can be executed in silicone or any other material that on one hand has sufficient elasticity to expand/close in a similar way as described in Figures 3a, 3b with regards to diffuser 31 and, on the other, has sufficient thermal resistance.

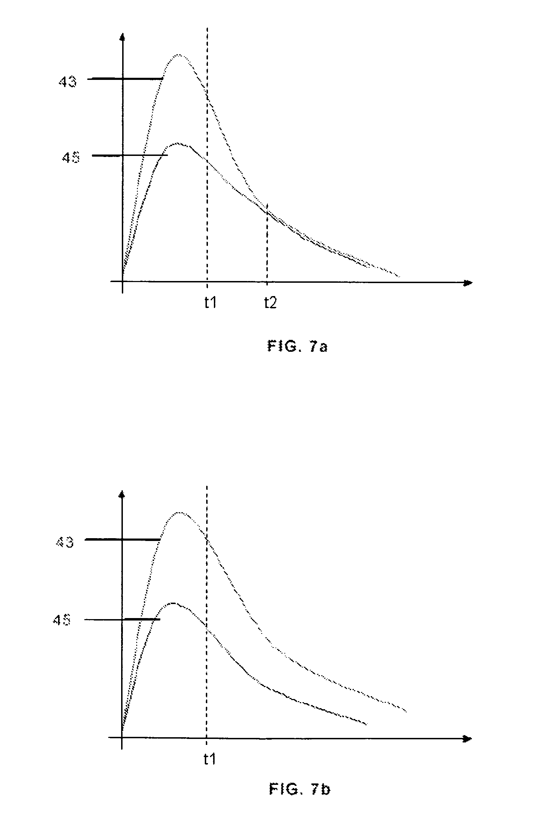

The multiple functionality of a side airbag module with anti-return diffuser as per this invention with regards to a side airbag module is illustrated in Figures 7a and 7b through the pressure charts 43, 45 in, respectively, the thorax chamber 13 and pelvis 15.

Figure 7a shows that the lateral airbag module as per the previous technique, after instant t1 that initiates the interaction between the occupant and the pressure bag 43 of the pelvis chamber 15 will descend until balanced with the pressure 45 of the thorax chamber 13 in instant t2, maintaining both pressure balanced to the end of the interaction between the occupant and bag.

Figure 7b shows that the lateral airbag module, as per this invention, after instant t1 that initiates the interaction between the occupant and pressure bag 43 of the pelvis chamber 15 continues to be greater than pressure 45 in the thorax chamber 13 until the end of the interaction between the occupant and the bag.

This bag behaviour allows efficiently protecting one same occupant in different crash configurations at different intrusion speeds, for example, a crash configuration with two types of barrier and two speeds or a crash configuration with one barrier and three speeds.

Although we have described and represented several executions of the invention, it is obvious it can be modified within its scope, and should not be considered limited to these executions, but to the content of the following claims:

## Claims

1. Airbag module for car that includes a bag (11) consisting of at least two chambers (13, 15) inflatable with gas produced by a generator (21) and provided to each one of the through nozzles connected to the distributor conduit (23) connected to the generator (21); such nozzles being configured to provide varying gas pressures in the chambers (13, 15), **characterized in that** it also includes a diffuser (33) associated to the distribution conduit (23) in order to prevent the passage of gas between the chambers (13, 15) through the distribution conduit (23) after supplying gas from the generator (21), said diffuser (33) consisting in a tubular piece of flexible material connected to the bag (11) and extending around the distribution conduit (23) in both chambers (13, 15) covering its gas outlets; said diffuser (33) having in chamber (15) that receives gas at higher pressure, a greater length than the part of the distribution conduit (23) located inside.

2. Airbag modules for car that includes a bag (11) consisting of at least two chambers (13, 15) inflatable with gas produced by a generator (21) and provided to each one of the through nozzles connected to the distributor conduit (23) connected to the generator (21); such nozzles being configured to provide varying gas pressures in the chambers (13, 15), **characterized in that** it also includes a diffuser (35) associated to the distribution conduit (23) in order to prevent the passage of gas between the chambers (13, 15) through the distribution conduit (23) after supplying gas from the generator (21), said diffuser (35) consisting of a tubular piece of flexible material connected to bag (11) and extending around the distribution conduit (23) in both chambers (13, 15) covering its gas exhausts; the diffuser (33) having in the chamber (15) that receives the gas at greater pressure a greater length than the distributor conduit part (23) located inside and considering in the chamber (13) that receives gas at less pressure an orifice (39) for distributing gas.

3. Airbag module for car as per claim 1 or 2, **characterized in that** the diffuser (31, 33, and 35) is executed with a tissue equal or similar to the bag (11).

4. Airbag module for car that includes a bag (11) consisting of at least two chambers (13, 15) inflatable with gas produced by a generator (21) and provided to each one of the through nozzles connected to the distributor conduit (23) connected to the generator (21); such nozzles being configured to provide varying gas pressures in the chambers (13, 15), **characterized in that** it also includes a diffuser (37) associated to the distribution conduit (23) in order to prevent the passage of gas between the chambers (13, 15) through the distribution conduit (23) after supplying gas from the generator (21), said diffuser (37) consisting in a tubular piece of flexible material surrounding the distributor conduit (23) and connected to it with the diffuser (37) in the chamber (15) that receives gas at greater pressure a greater length than the part of the distribution conduit (23) located inside it and the chamber (13) that receives gas at less pressure an orifice (39) to distribute gas.

5. Airbag module for car as per claim 4, **characterized in that** such diffuser (31, 33, 35) is performed with silicone.

6. Airbag module for car as per any of claims 1-5, **characterized in that** the airbag module is a lateral airbag module in which the chamber (15) that receives gas at higher pressure is a chamber destined to protect the pelvis and chamber (13) that receives gas at a lower pressure is destined to protect the thorax.

## Patentansprüche

1. Airbag-Modul für ein Fahrzeug, das einen Sack (11) aufweist bestehend aus mindestens zwei Kammern (13,15), welche mit Gas aufblasbar sind, das von einem Generator (21) produziert und jeder der Durchgangsdüsen zugeführt wird, welche mit der an den Generator (21) angeschlossenen Verteilungsleitung (23) verbunden sind; wobei diese Düsen derart ausgeführt sind, dass sie unterschiedliche Gasdrücke in den Kammern (13, 15) bereitstellen, **dadurch gekennzeichnet, dass** es außerdem einen mit der Verteilungsleitung (23) verbundenen Diffuser (33) aufweist, um den Gasdurchfluss zwischen den Kammern (13, 15) durch die Verteilungsleitung (23) nach der Gaszufuhr von dem Generator (21) zu verhindern, wobei der Diffuser (33) aus einem rohrförmigen Teil aus einem biegsamen Material besteht, das mit dem Sack (11) verbunden ist und sich um die Verteilungsleitung (23) in beiden Kammern (13, 15) erstreckt, die dessen Gasauslässe bedecken; wobei der Diffuser (33) in der Kammer (15), die Gas mit höherem Druck aufnimmt, eine größere Länge aufweist als der Teil der darin angeordneten Verteilungsleitung (23).

2. Airbag-Modul für ein Fahrzeug, das einen Sack (11) aufweist bestehend aus mindestens zwei Kammern (13,15), welche mit Gas aufblasbar sind, das von einem Generator (21) produziert und jeder der Durchgangsdüsen zugeführt wird, welche mit der an den Generator (21) angeschlossenen Verteilungsleitung (23) verbunden sind; wobei diese Düsen derart ausgeführt sind, dass sie unterschiedliche Gasdrücke in den Kammern (13, 15) bereitstellen, **dadurch gekennzeichnet, dass** es außerdem einen mit der Verteilungsleitung (23) verbundenen Diffuser (33) aufweist, um den Gasdurchfluss zwischen den Kammern (13, 15) durch die Verteilungsleitung (23) nach der Gaszufuhr von dem Generator (21) zu verhindern, wobei der Diffuser (33) aus einem rohrförmigen Teil aus einem biegsamen Material besteht, das mit dem Sack (11) verbunden ist und sich um die Verteilungsleitung (23) in beiden Kammern (13, 15) erstreckt, die dessen Gasauslässe bedecken; wobei der Diffuser (33) in der Kammer (15), die das Gas mit höherem Druck aufnimmt, eine größere Länge aufweist als der darin angeordnete Verteilungsleitungsteil (23), und in der Kammer (13), die Gas mit geringerem Druck aufnimmt, eine Öffnung (39) zur Verteilung von Gas berücksichtigt.

3. Airbag-Modul für ein Fahrzeug gemäß Anspruch 1 oder 2, **dadurch gekennzeichnet, dass** der Diffuser (31, 33 und 35) aus dem gleichen oder einem ähnlichen Gewebe wie der Sack (11) ausgeführt ist.

4. Airbag-Modul für ein Fahrzeug, das einen Sack (11) aufweist bestehend aus mindestens zwei Kammern (13,15), welche mit Gas aufblasbar sind, das von einem Generator (21) produziert und jeder der Durchgangsdüsen zugeführt wird, welche mit der an den Generator (21) angeschlossenen Verteilungsleitung (23) verbunden sind; wobei diese Düsen derart ausgeführt sind, dass sie unterschiedliche Gasdrücke in den Kammern (13, 15) bereitstellen, **dadurch gekennzeichnet, dass** es außerdem einen mit der Verteilungsleitung (23) verbundenen Diffuser (37) aufweist, um den Gasdurchfluss zwischen den Kammern (13, 15) durch die Verteilungsleitung (23) nach der Gaszufuhr von dem Generator (21) zu verhindern, wobei der Diffuser (37) aus einem rohrförmigen Teil aus einem biegsamen Material besteht, das die Verteilungsleitung (23) umgibt und an diese angeschlossen ist, und der Diffuser (37) in der Kammer (15), die Gas mit höherem Druck aufnimmt, eine größere Länge aufweist als der Teil der darin angeordneten Verteilungsleitung (23) und die Kammer (13), die Gas mit geringerem Druck aufnimmt, eine Öffnung (39) zur Verteilung von Gas aufweist.

5. Airbag-Modul für ein Fahrzeug gemäß Anspruch 4, **dadurch gekennzeichnet, dass** der Diffuser (31, 33, 35) mit Silikon ausgeführt ist.

6. Airbag-Modul für ein Fahrzeug gemäß einem der Ansprüche 1 bis 5, **dadurch gekennzeichnet, dass** das Airbag-Modul ein seitliches Airbag-Modul darstellt, in welchem die Kammer (15), die Gas mit höherem Druck aufnimmt, eine Kammer zum Schutz des Beckens darstellt und die Kammer (13), die Gas mit geringerem Druck aufnimmt, zum Schutz des Thorax vorgesehen ist.

## Revendications

1. Module airbag pour véhicule incluant un sac (11) consistant en au moins deux chambres (13, 15) gonflables avec du gaz produit par un générateur (21) et distribué à chacune au travers de tuyères connectées à à un conduit de distribution (23) lui- même connecté au générateur (21); les dites tuyères étant configurées pour fournir des pressions variables de gaz dans les chambres (13, 15), **caractérisé en ce qu'**il inclut aussi un diffuseur (33) associé au conduit de distribution (23) dans le but de prévenir le passage de gaz entre les chambres (13, 15) au travers du conduit de distribution (23) après la fourniture du gaz par le générateur (21), le dit diffuseur (33) consistant en une pièce tubulaire fait d'un matériau flexible connecté au sac (11) et recouvrant le conduit de distribution (23) dans les deux chambres (13, 15) couvrant ses sorties de gaz; le dit diffuseur (33) ayant dans la chambre (15) qui reçoit les gaz à la plus haute pression, une longueur plus grande que la partie du conduit de distribution (23) logée à l'intérieur.

2. Module airbag pour véhicule incluant un sac (11) consistant en au moins deux chambres (13, 15) gonflables avec du gaz produit par un générateur (21) et distribué à chacune au travers de tuyères connectées à à un conduit de distribution (23) lui- même connecté au générateur (21); les dites tuyères étant configurées pour fournir des pressions variables de gaz dans les chambres (13, 15), **caractérisé en ce qu'**il inclut aussi un diffuseur (35) associé au conduit de distribution (23) dans le but de prévenir le passage de gaz entre les chambres (13, 15) au travers du conduit de distribution (23) après la fourniture du gaz par le générateur (21), le dit diffuseur (35) consistant en une pièce tubulaire fait d'un matériau flexible connecté au sac (11) et recouvrant le conduit de distribution (23) dans les deux chambres (13, 15) couvrant ses sorties de gaz; le dit diffuseur (33) ayant dans la chambre (15) qui reçoit les gaz à la plus haute pression, une longueur plus grande que la partie du conduit de distribution (23) logée à l'intérieur et considérant dans la chambre (13) qui reçoit les .gaz à moindre pression un orifice (39) pour distribuer les gaz.

3. Module Airbag pour véhicule selon la revendication 1 ou 2, **caractérisé en ce que** le diffuseur (31, 33 et 35) est réalisé avec un tissu identique ou équivalent à celui du sac (11).

4. Module airbag pour véhicule incluant un sac (11) consistant en au moins deux chambres (13, 15) gonflables avec du gaz produit par un générateur (21) et distribué à chacune au travers de tuyères connectées à à un conduit de distribution (23) lui- même connecté au générateur (21); les dites tuyères étant configurées pour fournir des pressions variables de gaz dans les chambres (13, 15), **caractérisé en ce qu'**il inclut aussi un diffuseur (37) associé au conduit de distribution (23) dans le but de prévenir le passage de gaz entre les chambres (13, 15) au travers du conduit de distribution (23) après la fourniture du gaz par le générateur (21), le dit diffuseur (37) consistant en une pièce tubulaire fait d'un matériau flexible recouvrant le conduit de distribution (23) et connecté à lui avec le diffuseur (37) dans la chambre (15) qui reçoit les gaz à la plus haute pression, une longueur plus grande que la partie du conduit de distribution (23) logée à l'intérieur et la chambre (13) qui reçoit les gaz à moindre pression un orifice (39) pour distribuer les gaz.

5. Module airbag pour véhicule selon la revendication 4, **caractérisé en ce que** le diffuseur (31, 33, 35) est réalisé avec du silicone.

6. Module airbag pour véhicule selon l'une des revendication 1 à 5, **caractérisé en ce que** le module airbag est un module airbag latéral dans lequel la chambre (15) qui reçoit les gaz à plus haute pression est une chambre destinée à protéger le bassin et la chambre (13) qui reçoit les gaz à pression plus faible est destinée à protéger le thorax.
